Europäisches Patentamt

**European Patent Office**

Office européen des brevets

(11) Publication number: **0 251 132**
**B1**

# EUROPEAN PATENT SPECIFICATION

(45) Date of publication of the patent specification:
19.09.90

(51) Int. Cl.⁵: **D21H 23/28**, D21H 23/76,
D21H 17/21

(21) Application number: 87108968.6

(22) Date of filing: 23.06.87

(54) A method for producing paper.

(30) Priority: 26.06.86 JP 148136/86

(43) Date of publication of application:
07.01.88 Bulletin 88/1

(45) Publication of the grant of the patent:
19.09.90 Bulletin 90/38

(84) Designated Contracting States:
DE FR GB IT NL

(56) References cited:
GB-A- 1 319 951
US-A- 2 756 647
US-A- 4 356 115

STÄRKE, vol. 34, no. 11, November 1982, pages 379-385,
Verlag Chemie GmbH, Weinheim, DE; J. SZEJTLI:
"Cyclodextrins in food, cosmetics and toiletries"
Idem

(73) Proprietor: SHIBANAI, Ichiro,
10-6-312 Akasaka 6-chome, Minato-ku Tokyo 107(JP)

(72) Inventor: SHIBANAI, Ichiro, 10-6-312 Akasaka 6-chome,
Minato-ku Tokyo 107(JP)

(74) Representative: Brandes, Jürgen, Dr.Rer.Nat., Wuesthoff
& Wuesthoff Patent- und Rechtsanwälte
Schweigerstrasse 2, D-8000 München 90(DE)

## Description

### BRIEF DESCRIPTION OF THE INVENTION

### TECHNICAL FIELD OF THE INVENTION

The present invention relates to a method for producing paper. More specifically, in the present invention, perfumes, insectifuges/insecticides, rust preventives, mold/mildew proofing agents, anti-fungi agents or bactericides are included in cyclodextrin to form molecular inclusion compound or emulsified by cyclodextrin, and they are mixed in the paper during a paper making process.

### PRIOR ART

Paper products having fragrance and papers having mold/mildew proof effects or antibacterial and bactericidal effects have been manufactured.

Such conventional products are manufactured by coating desired agents or perfumes on surfaces of paper products after a finished product as a paper product is obtained so as to give the desired effects to the finished product.

Since the agents are directly coated on the surfaces of the paper products in such conventionally known products, a large amount of the agents are volatilized and lost. Further, since the time wherein the effects of the agents last is very short, the conventionally known paper products are uneconomical. In other words, when such a coating treatment is performed, the life time of the effects of the agents is short and the effects do not last for a long time.

In a case wherein paper has not been subjected to a antibacterial and bactericidal treatment, the paper for a particular usage may be moldy with passage of time, and the image thereof may be hurted.

### OBJECT OF THE INVENTION

It is an object of the present invention to provide paper products which can obviate the above-described problems and in which agents having fragrance, effects of insecticide, rust preventive effect, mold/mildew proofing effects, and/or antibacterial and bactericidal effects are gradually volatiled and the effects of the agents last for a long time.

It is another object of the present invention to provide paper products which does not require coating of agents having fragrance, effects of insecticide, rust preventive effect, mold/mildew proofing effects, and/or antibacterial and bactericidal effects, and from which the agents are volatilized gradually.

### SUMMARY OF THE INVENTION

The present invention provides a method for producing paper characterized in that cyclodextrin and one or more substances selected from the group consisting of perfumes, insectifuges/insecticides, rust preventives, mold/mildew proofing agents, anti-fungi agents and bactericides are mixed with a mixture of pulp and water before drying section in a paper making process.

The paper products manufactured to the method according to the present invention include in paper, i.e., between fibers constituting the paper, substances such as perfumes, insectifuges/insecticides, rust preventives, mold/mildew proofing agents, anti-fungi agents and bactericides.

### DETAILED DESCRIPTION OF THE INVENTION

According to the present invention, substances, such as perfumes, insectifuges/insecticides, rust preventives, mold/mildew proofing agents, anti-fungi agents or bactericides, are included in cyclodextrin to form molecular inclusion compounds or emulsified by surface activity of cyclodextrin. The molecular inclusion compounds of such agents, emulsion of such agents, or a mixture of such inclusion compounds and such emulsion are mixed with a mixture of pulp and water in a paper making process, and thereafter, they are subjected to drying treatment to be paper.

According to the present invention, a mixture of pulp and water, which has not been subjected to drying treatment, is mixed with molecular inclusion compounds of the agents or emulsion of such agents, which inclusion compounds or emulsion can be uniformly dispersed in water. Accordingly, the agents are uniformly dispersed in the paper product manufactured in accordance with the method of the present invention.

Cyclodextrin, which is used in the present invention, is a special dextrin in which molecules of D-glucose are bonded through alpha 1,4 linkages to form a cyclic structure, and this compound is characterized in that it had a doughnut-like molecular structure and includes in the interior thereof voids having a diameter of 6 to 10 Å. Cyclodextrin includes three types, that is, alpha-type, beta-type and gamma-type, differing in the number of D-glucose constituent units. The cyclodextrin used in the present invention may be any type, i.e., it may be alpha-cyclodextrin, beta-cyclodextrin, gamma-cyclodextrin, the derivative of cyclodextrin, or the mixture thereof.

The cyclodextrin may be of powder or cyclodextrin-containing starch decomposition product (for example, Celdex CH-20, manufactured by Nippon Shokuhin Kako K.K.). Further, as will be described later in detail, the cyclodextrin used in the present invention may be in the form of reduced cyclodextrin syrup, reduced cyclodextrin syrup added with cyclodextrin, or reduced syrup added with cyclodextrin.

Among the three types, beta-cyclodextrin will now be described. It is white crystalline powder and is represented by the molecular formula $(C_6H_{10}O_5)_7$, the molecular weight is 1135, and the melting point is between 300 and 305°C (decomposition).

A starch decomposition product containing cyclodextrin, that is used in the present invention, can be prepared according to various methods. For example, such starch decomposition product is obtained as an intermediate product in the method for preparing cyclodextrin by reacting starch with a cyclodextrin-forming enzyme produced by a microorganism belonging to the genus Bacillus. This method will now be described in detail.

At first, the pH of a starch solution is adjusted to 10 to effect uniform gelatinization, and after cooling, the gelatinized starch is reacted with cyclodextrin glycosyltransferase, which is a fermentation product of a microorganism selected from Bacillus strain No. 13, Bacillus strain No. 17-1, Bacillus strain No. 38-2, Bacillus strain No. 135 and Bacillus strain No. 169 and has an optimum pH on the alkaline side and a high temperature stability. After the liquid reaction mixture is heated to deactivate the enzyme, it is cooled, and the pH is adjusted to 5.0. Then, commercially available glucuamylase is added to the liquid reaction mixture to decompose the unreacted starting material.

Then, filtration is carried out according to customary procedures, and the filtrate is condensed so that the concentration of cyclodextrin is at least about 40 %. When a small amount of cyclodextrin is added as a seed crystal to the condensate and it is allowed to stand still, cyclodextrin is separated and precipitated. The precipitate is recovered by filtration and dried to obtain beta-cyclodextrin. The above filtrate is a cyclodextrin-containing starch decomposition product that is aimed (See Japanese Patent Publication No. 43897/77).

All of the above-mentioned Bacillus strain No. 13, Bacillus strain No. 17-1, Bacillus strain No. 38-2, Bacillus strain No. 135 and Bacillus strain No. 169 were deposited at Fermentation Research Institute, Agency of Industrial Science and Technology, with FRI Deposition Nos. 611, 612, 614, 617 and 618, respectively.

A product obtained by refining the above-mentioned filtrate with an ion exchange resin and concentrating the refined filtrate is commercially available as cyclodextrin-containing starch syrup. In the present invention, this starch syrup may be used.

The starch decomposition product containing cyclodextrin is not limited to those obtained according to the above-explained method. Any of starch decomposition products containing alpha-cyclodextrin, beta-cyclodextrin, gamma-cyclodextrin or a mixture thereof may be used in the present invention irrespectively of the manufacturing method.

The reduced syrup used in the present invention is obtained by hydrolyzing starch with acid or enzyme to give a maltooligosaccharide mixture comprising glucose, maltose, maltotriose and so on and hydrogenating the mixture in the presence of a nickel catalyst under a high pressure. Thus reducing end-groups of the reducing sugars are hydrogenated to give the corresponding glycitols. That is, glucose, maltose and maltoriose are converted into sorbitol, maltitol and maltotriitol, respectively, and lose their reductivity. Thus the D.E. (dextrose equivalent: the ratio of reducing sugars to the total solid matters) of the mixture turns to zero. Therefore, the mixture becomes more stable to heat and shows little coloration caused by a reaction with amino radicals contained in amino acids or the like, i.e., aminocarbonyl reaction.

The reduced cyclodextrin syrup used in the present invention means the reduced syrup described above which have cyclodextrin contained therein. Since cyclodextrin exhibits no reductivity, the D.E. (dextrose equivalent: the ratio of reducing sugars to the total solid matters) of the same is zero. In practice, the reduced cyclodextrin syrup can be obtained by catalytically reducing syrup containing cyclodextrin, e.g., Celldex CH-20 or CH-30 manufactured by Nippon Shokuhin Kako Kabushiki Kaisha, in the manner described above. The cyclodextrin contained therein shows no change by the above-described procedure but reducing sugars other than the cyclodextrin are reduced and converted into the corresponding glycitols.

Either natural or synthetic perfumes may be used as perfumes used in the present invention. Examples of natural perfumes are animal or vegetable perfumes such as lavender oil, citronella oil, rose oil, lemon oil and jasmin oil. Various synthetic perfumes may be used. Examples of synthetic perfumes are ethyl acetoacetate ($C_6H_{10}O_3$), acetophenone ($C_8H_8O$), anisic aldehyde ($C_8H_8O_2$), benzyl benzoate ($C_{14}H_{12}O_2$), amyl cinnamic aldehyde ($C_{14}H_{18}O$), methyl benzoate ($C_8H_8O_2$), etyle isovalerate ($C_7H_{14}O_2$), ethyl vanillin ($C_9H_{10}O_3$), ethylene brassylate ($C_{15}H_{26}O_4$), ethyl formate ($C_3H_6O_2$), citronellyl formate ($C_{11}H_{20}O_8$), coumarin ($C_9H_6O_2$), cuminaldehyde ($C_{10}H_{12}O$), cinnamyl alcohol ($C_9H_{10}O$), geraniol ($C_{10}H_{18}O$), acetyl eugenol ($C_{12}H_{14}O_3$), citronellyl acetate ($C_{12}H_{22}O_2$), terpinyl acetate ($C_{12}H_{20}O_2$), benzyl acetate ($C_9H_{10}O_2$), isoamyl salicylate ($C_{12}H_{16}O_3$), benzyl salicylate ($C_{14}H_{13}O_3$), cyclamen aldehyde ($C_{13}H_{18}O$), citral ($C_{10}H_{16}O$), citronellol ($C_{10}H_{20}O$), tetrahydrolinalool ($C_{10}H_{22}O$), terpineol ($C_{10}H_{18}O$), vanillin ($C_8H_8O_3$), ethyl phenylacetate ($C_{10}H_{12}O_2$), heliotropin ($C_6H_6O_3$), musk ambrette ($C_{12}H_{16}O_5N_2$), p-methylacetophenone ($C_9H_{10}O$), methylionone ($C_{14}H_{22}O$), ethyl methyl phenylglycidate ($C_{12}H_{14}O_3$), 1-menthol ($C_{10}H_{20}O$), butyric acid ($C_4H_8O_2$), linalool ($C_{10}H_{18}O$), linonene & dipentene ($C_{10}H_{16}$), rosephenone ($C_{10}H_9Cl_3O_2$) and rosinol ($C_{10}H_{20}O$).

The mildewproofing agents used in the present invention are those having antibacterial and bactericidal effects. Examples of a substance which mainly serves as an antibacterial agent or a bcatericide are chlorhexydine gluconate ($C_{22}H_{30}Cl_2N_{10} \cdot 2C_6H_{12}O_7$:897.77), N-(fluorodichloromethylthio) phthalimide and alpha-bromocinnamaldehyde ($C_9H_2OBr$).

Examples of compounds mainly available as a mildew-proofing agent are as follows: thiabendazole; 2-hydroxydiphenyl; N-dimethyl-N′-phenyl-(N′-fluorodichloromethylthio) sulfamide; 3-methyl-4-chlorophenol (p-chloro-m-cresol); tolyltriazole (1-H-4/5-methylnbenzotriazole); and benzotriazole (1,2,3-benzotriazole).

The insectifuges used in the present invention include not only repellents such as citronella oil but also those having an insectifugal and insecticidal effect. More specifically, it is preferred to use organic phosphorus or pyrethroid insecticides.

An example of the organic phosphorus insecticide used in the present invention is fenitrothion, i.e., O,O-dimethyl O-(3-methyl-4-nitrophenyl) thiophosphorate.

Examples of the pyrethroid insecticides are as follows: allethrin, i.e., dl-3-allyl-2-methyl-4-oxo-2-cyclopentenyl dl-cis/trans-chrysanthemate; phthalthrin, i.e., (1,3,4,5,6,7-hexahydro-1,3-dioxo-2-isoindolyl) methyl dl-cis/trans-chrysanthemate; resmethrin, i.e., (benzyl-3-furyl) methyl dl-cis/trans- chrysanthemate; furamethrin, i.e., (5-(2-propinyl)-2-furyl) methyl dl-cis/trans-chrysanthemate; phenothrin, i.e., 3-phenoxybenzyl d-cis/trans-chrysanthemate; permethrin, i.e., 3-phenoxybenzyl dl-cis/trans-3-(2,2-dichlorovinyl)-2,2-dimethyl-1-cyclopropanecarboxylate; and 2-(4-ethoxyphenyl)-2-methylpropyl-3-phenoxybenzyl ether.

Organic phorsphorus and pyrethroid insecticides are used as insectifugal and insecticidal agents since they exhibit an excellent effect, a low toxcity and a high stability and are available in a wide range. Further, they can be readily formulated into an inclusion compound in cyclodextrin.

Any rust preventives may be used in the present invention so long as they can be included in cyclodextrin or can be emusified by cyclodextrin. For example, liquid paraffin or spindle oil may be used. Volatile rust preventives or volatile rust preventive oils may also be employed, for example, dicyclohexylammonium nitrite, i.e., $(C_6H_{10})_2NH_3HNO_2$, diisopropylamine nitrite, i.e., $((CH_3)_2CH)_2NH \cdot HNO_2$(dipan), and ferro-bright oil may be employed.

The cyclodextrin molecular inclusion compound, wherein the above-described substances, such as perfumes, insectifuges/insecticides, rust preventives, mold/mildew proofing agents, anti-fungi agents or bactericides, are entrapped in cyclodextrin as a guest, may be produced by way of a saturated aqueous solution method or a kneading method.

More specifically, in the saturated aqueous solution method, a constant amount of the guest is added to a saturated aqueous solution of cyclodextrin or a supersaturated aqueous solution of cyclodextrin, and then, the solution is agitated for a time between tens of minutes and some hours under a temperature below 70°C, and cyclodextrin molecular inclusion compound is obtained.

In the kneading method, water or hot water is added to cyclodextrin to form a slurry, and then, a required amount of the guest is added to the slurry at a temperature below 70°C. Thereafter, the slurry is agitated well in a kneader for a time between tens of minutes and some hours, and pasty material containing cyclodextrin molecular inclusion compound is obtained. If powder cyclodextrin is used in this kneading method, hot water, the weight of which is between 0.1 and 6 times of the weight of the cyclodextrin, is added to the cyclodextrin to form a paste or suspension.

When a cyclodextrin-containing starch decomposition product, a cyclodextrin containing malt syrup available on the market, or a reduced cyclodextrin syrup is used, about the same weight of water as that of decomposition product or syrup is added or no water is added, since the decomposition product or syrup contains some water between about 25 to 40% or 70 to 80%.

The ratio of the guest and the cyclodextrin, which is used as a host, is not limited as long as the guest can be included in the cyclodextrin. For example, molar ratio of about 1:1 can be used.

The paste produced by the above-described saturated aqueous solution method or kneading method and containing cyclodextrin molecular inclusion compound is rinsed, and then is dried by way of spraying, ventilating or freezing method and powder molecular inclusion compound is obtained.

Water-insoluble agents in the above-described substances, such as perfumes, insectifuges/insecticides, rust preventives, mold/mildew proofing agents, anti-fungi agents or bactericides, can be emulsified by surface activity of cyclodextrin. More specifically, when the above-described water-insoluble agents are mixed with water and agitated, an emulsion can be obtained.

A part of the above-described agents may be entrapped in cyclodextrin and changed to molecular inclusion compounds depending on the ratio between the agents and the cyclodextrin, and molecular size of the agents. That is, mixing condition of molecular inclusion compound of cyclodextrin and emulsion may be obtained. When the proportion of cyclodextrin is large, molecular inclusion compound may be readily formed. When it is intended to form emulsion, molar ratio of cyclodextrin to water-insoluble agents may be small, for example, less than one half or one third.

According to the present invention, the molecular inclusion compounds of the agents included in cyclodextrin and/or the emulsion of the agents emulsified by cyclodextrin are sprayed or coated on a mixture of pulp and water in a paper making process.

Moisture content of a mixture comprising pulp and water is usually between 50 and 70 % just after press section in a paper making process. It is preferred that spraying or coating of the molecular inclusion compounds and/or the emulsion is performed to a paper web having a moisture content of between about 50 and 60 % at a position between the press section and drier section.

When the molecular inclusion compounds are used, it is preferred that are mixed with water to form emulsion having an adequate concentration before they are sprayed or coated.

Further, when two or more kinds of the molecular inclusion compounds of the agents and/or the emulsion of the agents are used, they may be previously mixed to form spraying agents or coating agents, and alternatively, spraying agents and /or coating agents may be prepared separately from them, and they may be sprayed or coated separately.

As described above, since liquid or emulsion containing the agents and cyclodextrin is sprayed or coated to a mixture of pulp and water having a moisture content of between about 50 and 70 %, the agents invade between fibers of the paper together with the cyclodextrin. Thereafter, the paper web having the agents entered between fibers thereof is dried, and paper having fragrance, effects of insecticide, rust preventive effect, mold/mildew proofing effects, and/or antibacterial and bactericidal effects is obtained.

EXAMPLES

(Example 1)

In a process for manufacturing a kraft paper of 20g/m², at the press section where pulp formed in web of paper was pressed out to 60 % water before it was transferred to the driers, fenitrothion emulsion (containing 1% of cyclodextrin inclusion compound of fenitrothion) was sprayed at a rate of 5 g/m² with pressure through a pipe having small holes formed therein, then it was passed between drier rollers heated at 100°C and was wound to give kraft paper containing insecticides.

Effects of the thus obtained paper containing insecticides were observed as passage of time. As a result, it was confirmed that the effects lasted more than about 6 months.

(Example 2)

In a process for manufacturing a kraft paper of 20g/m², at the press section where pulp formed in web of paper was pressed out to 50 % water before it was transferred to the driers, fenitrothion emulsion (containing 1% of cyclodextrin inclusion compound of fenitrothion) was sprayed at a rate of 7 g/m² with pressure through a pipe having small holes formed therein, then it was passed between drier rollers heated at 95°C and was wound to give kraft paper containing insecticides.

Effects of the thus obtained paper containing insecticides were observed as passage of time. As a result, it was confirmed that the effects lasted more than about 6 months.

(Example 3)

One thousand parts by weight of zeolite having anti-fungal properties (manufactured by Sinanen New Ceramics Kabushiki Kaisha under trademark "Vacte Killer") were added to 8000 parts by weight of starch decomposition product containing cyclodextrin (manufactured by Nippon Shokuhin Kako Kabushiki Kaisha, trademark "CH-30") and agitated at a temperature of 60°C. Then, 1000 parts by weight of liquid containing 20 % of thiabendazole were added thereto and similarly agitated. After the mixture was allowed to stand still at a room temperature, it was diluted to about 10 times of its original volume. The thus obtained agent was filled with a tank of roll coater disposed just before driers in the paper manufacturing process and was applied to paper at 7 g/m². The paper was wound through driers heated at 120°C to obtain paper having antibacterial and bactericidal effects.

The thus manufactured paper was used for a box for packaging soaps, and the effects lasted for about one year.

(Example 4)

Two hundred parts by weight of Hinoki oil obtained from Chamaecyparis obtusa was mixed with 8000 parts of glycitol containing cyclodextrin (manufactured by Nippon Shokuhin Kako Kabushiki Kaisha, under trademark "Celldex CH-20H") and agitated at a temperature of 70°C. After the Hinoki oil is included by cyclodextrin as molecular inclusion compound, the mixture was diluted at twice. The thus obtained agent was filled with a tank of metallic roll coater disposed in the paper manufacturing process and was applied to paper while the paper was pressed. The paper was wound after it was dried to obtain paper having fragrance of forest.

The fragrance of Hinoki oil of the thus manufactured paper was lasted for three months.

(Example 5)

One thousand and five hundred parts by weight of organic phosphorus insecticide, fenitrothion, and 500 parts by weight of allethrin (one of pyrethroid insecticides) are mixed, and the mixture was added to 8000 parts by weight of aqueous solution of beta-cyclodextrin and agitated at temperature of 65°C to form molecular inclusion compound. Thereafter, 10,000 parts by weight of glycitol were added and agitated. After the mixture was allowed to stand still at a room temperature, it was diluted to about 10 times of its original volume. The thus obtained agent (moisture content of 30%) was filled with a tank of roll coater disposed just before driers in the paper manufacturing process and was applied to paper at 20 g/m². The paper was wound after it was dried at a temperature of 110°C, to obtain insecticide paper for use under tatami mat.

The effects lasted for about one year.

ADVANTAGES OF THE INVENTION

As described above, according to the method for producing paper of the present invention, unexpected advantages can be achieved that various kinds of agent can be readily mixed in the process for manufacturing paper, and that the effects of the agents last for long period. More specifically, when the agents are included in cyclodextrin to form molecular inclusion compounds, their volatilization is inhibited, and their effects last for long period. When the agents are emulsified by cyclodextrin, the agents remain not only on the surface of the paper but also invade between fibers within the paper, and accordingly, the life time of the agents is longer than of the conventional paper wherein the agents are coated only on the surface. Further, when reduced syrup or reduced cyclodextrin syrup is used, glycitols therein inhibit volatilization of the agents, and the effects of the agents last for long period.

Claims

1. A method for producing paper characterized in that cyclodextrin and one or more substances selected from the group consisting of perfumes, insectifuges/insecticides, rust preventives, mold/ mildew proofing agents, anti-fungi agents and bactericides are added to a mixture of pulp and water before drying section in a paper making process.

2. A method for producing paper according to claim 1, wherein said one or more substances selected from the group consisting of perfumes, insectifuges/insecticides, rust preventives, mold/mildew proofing agents, anti-fungi agents and bactericides are molecular inclusion compound included in cyclodextrin.

3. A method for producing paper according to claim 1, wherein said molecular inclusion compound of one or more substances selected from the group consisting of perfumes, insectifuges/insecticides, rust preventives, mold/mildew proofing agents, antifungi agents and bactericides and emulsion of one or more substances selected from the group consisting of perfumes, insectifuges/insecticides, rust preventives, mold/mildew proofing agents, anti-fungi agents and bactericides, emulsified by cyclodextrin, are added to said mixture of pulp and water.

4. A method for producing paper according to claim 1, wherein emulsion of said one or more substances selected from the group consisting of perfumes, insectifuges/insecticides, rust preventives, mold/mildew proofing agents, anti-fungi agents and bactericides, emulsified by cyclodextrin are added to said mixture of pulp and water.

5. A method for producing paper according to claim 1, wherein a starch decomposition product containing cyclodextrin is used as said cyclodextrin.

6. A method for producing paper according to claim 1, wherein reduced cyclodextrin syrup is used as said cyclodextrin.

7. A method for producing paper according to claim 1, wherein reduced cyclodextrin syrup added with cyclodextrin is used as said cyclodextrin.

8. A method for producing paper according to claim 1, wherein reduced syrup added with cyclodextrin is used as said cyclodextrin.

9. A method for producing paper according to claim 1, wherein moisture content of said mixture of pulp and water is between 50 and 60 %.

10. Paper comprising therein cyclodextrin and one or more substances selected from the group consisting of perfumes, insectifuges/insecticides, rust preventives, mold/mildew proofing agents, anti-fungi agents and bactericides.

**Patentansprüche**

1. Verfahren zur Herstellung von Papier, dadurch gekennzeichnet, daß Cyclodextrin und eine oder mehrere Substanzen, ausgewählt aus der Gruppe bestehend aus Riechstoffen, Insekten vertreibenden Mitteln/Insektiziden, Rostschutzmitteln, Moder-/Schimmelschutzmitteln, Antipilzmitteln und Bakteriziden, einer Mischung aus Pulpe und Wasser vor dem Trocknungsabschnitt eines Papierherstellungsverfahrens zugesetzt werden.

2. Verfahren zur Herstellung von Papier nach Anspruch 1, in dem die eine oder mehrere Substanzen, ausgewählt aus der Gruppe bestehend aus Riechstoffen, Insekten vertreibenden Mitteln/Insektiziden, Rostschutzmitteln sowie Moder-/Schimmelschutzmitteln, Antipilzmitteln und Bakteriziden als in Cyclodextrin eingeschlossene molekulare Einschlußverbindungen zugesetzt werden.

3. Verfahren zur Herstellung von Papier nach Anspruch 1, in dem die molekulare Einschlußverbindung aus einer oder mehreren Substanzen, ausgewählt aus der Gruppe bestehend aus Riechstoffen, Insekten vertreibenden Mitteln/Insektiziden, Rostschutzmitteln, Moder-/Schimmelschutzmitteln, Antipilzmitteln und Bakteriziden und eine Emulsion aus einer oder mehreren Substanzen, ausgewählt aus der Gruppe bestehend aus Riechstoffen, Insekten vertreibenden Mitteln/Insektiziden, Rostschutzmitteln, Moder-/Schimmelschutzmitteln, Antipilzmitteln und Bakteriziden, durch Cyclodextrin emulgiert, zu der Mischung aus Pulpe und Wasser zugesetzt werden.

4. Verfahren zur Herstellung von Papier nach Anspruch 1, in dem eine Emulsion aus einer oder mehreren Substanzen, ausgewählt aus der Gruppe bestehend aus Riechstoffen, Insekten vertreibenden Mitteln/Insektiziden, Rostschutzmitteln, Moder-/Schimmelschutzmitteln, Antipilzmitteln und Bakteriziden, emulgiert durch Cyclodextrin, der Mischung aus Pulpe und Wasser zugesetzt wird.

5. Verfahren zur Herstellung von Papier nach Anspruch 1, in dem als Cyclodextrin ein Cyclodextrin enthaltendes Stärke-Abbauprodukt verwendet wird.

6. Verfahren zur Herstellung von Papier nach Anspruch 1, in dem als Cyclodextrin ein reduzierter Cyclodextrin-Syrup verwendet wird.

7. Verfahren zur Herstellung von Papier nach Anspruch 1, in dem als Cyclodextrin reduzierter Cyclodextrin-Syrup, versetzt mit Cyclodextrin, verwendet wird.

8. Verfahren zur Herstellung von Papier nach Anspruch 1, in dem als Cyclodextrin reduzierter Syrup, versetzt mit Cyclodextrin, verwendet wird.

9. Verfahren zur Herstellung von Papier nach Anspruch 1, in dem der Feuchtigkeitsgehalt der Mischung aus Pulpe und Wasser zwischen 50 und 60% liegt.

10. Papier, enthaltend Cyclodextrin und eine oder mehrere Substanzen, ausgewählt aus der Gruppe bestehend aus Riechstoffen, Insekten vertreibenden Mitteln/Insektiziden, Rostschutzmitteln, Moder-/Schimmelschutzmitteln, Antipilzmitteln und Bakteriziden.

**Revendications**

1. Procédé de fabrication de papier, caractérisé en ce qu'on ajoute au mélange de pâte et d'eau avant la section de séchage du procédé de fabrication de papier, de la cyclodextrine et une ou plusieurs substance(s) choisie(s) parmi les parfums, les insectifuges/insecticides, les agents antirouille, les agents de protection contre la moisissure ou le mildiou, les agents antifongiques et les bactéricides.

2. Procédé de fabrication de papier selon la revendication 1, dans lequel ladite ou lesdites substances choisies parmi les parfums, les insectifuges/insecticides, les agents anti-rouille, les agents de protection contre la moisissure et le mildiou, les agents anti-fongiques et les bactéricides est ou sont des composés d'inclusion moléculaire qu'on incorpore dans la cyclodextrine.

3. Procédé de fabrication de papier selon la revendication 1, dans lequel on ajoute su mélange de pâte et d'eau ledit composé d'inclusion moléculaire d'une ou plusieurs substance(s) choisie(s) parmi les parfums, les insectifuges/insecticides, les agents anti-rouille, les agents de protection de la moisissure et du mildiou, des agents anti-fongiques et des bactéricides et une émulsion d'une ou plusieurs substance(s) choisie(s) parmi les parfums, les insectifuges/insecticides, les agents antirouille, les agents de protection la moisissure et le mildiou, les agents anti-fongiques et les bactéricides, émulsifiées par la cyclodextrine.

4. Procédé de fabrication de papier selon la revendication 1, dans lequel on ajoute audit mélange de pâte et d'eau, une émulsion d'une ou plusieurs substance(s) choisie(s) parmi les parfums, les insectifuges/insecticides, les agents anti-rouille, les agents de protection contre la moisissure et le mildiou, les agents anti-fongiques et les bactéricides, émulsionnées par la cyclodextrine.

5. Procédé de fabrication de papier selon la revendication 1, dans lequel on utilise en qualité de cyclodextrine un produit de décomposition d'amidon contenant de la cyclodextrine.

6. Procédé de fabrication de papier selon la revendication 1, dans lequel on utilise à titre de cyclodextrine, un sirop réduit de cyclodextrine.

7. Procédé de fabrication de papier selon la revendication 1, dans lequel on utilise, à titre de cyclodextrine, un sirop réduit de cyclodextrine additionné de cyclodextrine.

8. Procédé de fabrication de papier selon la revendication 1, dans lequel on utilise, à titre de cyclodextrine, un sirop réduit additionné de cyclodextrine.

9. Procédé de fabrication de papier selon la revendication 1, dans lequel la teneur en humidité dudit mélange de pâte et d'eau est comprise entre 50 et 60%.

10. Papier comprenant de la cyclodextrine et une ou plusieurs substance(s) choisie(s) parmi les parfums, les insectifuges/insecticides, les agents anti-rouille, les agents de protection contre la moisissure et le mildiou, les agents antifongiques et les bactéricides.